# EUROPEAN PATENT SPECIFICATION

(11) **EP 1 449 752 B1**
(45) Date of publication and mention of the grant of the patent: **29.08.2007**
(21) Application number: 04100513.3
(22) Date of filing: 11.02.2004
(51) Int. Cl.: B62J 17/00, B62K 11/04

(54) **Motorcycle cowling**
Motorradverkleidung
Carénage pour motocyclette

(30) Priority: 20.02.2003 JP 2003042963
(43) Date of publication of application: 25.08.2004
(73) Proprietor: HONDA MOTOR CO., Ltd., Tokyo (JP)
(72) Inventor: TSUDA, Kazuhiro, SAITAMA (JP)
(74) Representative: Poulin, Gérard

(56) References cited:
- FR-A- 2 827 830
- US-A- 4 334 589
- US-A- 4 347 909
- US-A- 4 678 223
- "MOTORRADKATALOG 2003" 2002, MO MEDIEN VERLAG , LANDAU , XP002326000 Honda XRV 750 Africa Twin (cf. arrow) * page 79; figure 1 * KTM 660 Rallye Factory Replica (cf. arrow) * page 108; figure 2 *
- PATENT ABSTRACTS OF JAPAN vol. 017, no. 667 (M-1524), 9 December 1993 (1993-12-09) & JP 05 221362 A (YAMAHA MOTOR CO LTD), 31 August 1993 (1993-08-31)
- PATENT ABSTRACTS OF JAPAN vol. 015, no. 333 (M-1150), 23 August 1991 (1991-08-23) & JP 03 128787 A (YAMAHA MOTOR CO LTD), 31 May 1991 (1991-05-31)

## Description

### Technical Field

The present invention relates to a cowl structure of a motorcycle and particularly to a cowl structure of a motorcycle, which enables a cowl to be arranged in close proximity to an exhaust pipe, thus increasing a maximum bank angle or provide sufficient ground clearance.

### Prior Art

In a motorcycle in which an exhaust pipe is arranged in a front portion of an engine, it is known that the engine and the exhaust pipe are covered with a resin cowl (see Japanese Unexamined Utility Model Publication No. Heisei 4-93717).

A cowl which is generally used is made of resin. However, temperature of an exhaust pipe becomes relatively high and thus the resin cowl which covers the exhaust pipe cannot be arranged close to the exhaust pipe. As a result, a surrounding portion of the exhaust pipe is greatly projected to the side. In some cases, therefore, the maximum bank angle has to be increased and/or the ground clearance has to be reduced.

Document "MOTORRADKATALOG 2003", MO Medien Verlag, Landau, XP 002326000, page 108, KTM 660 Rallye Factory Replica, illustrates the closest prior art, according to the preamble of claim 1.

### Summary of the invention

Accordingly, an object of the present invention is to ensure a sufficient maximum bank angle and ground clearance by a cowl which covers the exhaust pipe. In order to solve the above-described problem, in a motorcycle which is provided with an engine positioned between front and rear wheels, an exhaust pipe extending from the engine to rear of a body through a lower portion of the body, and a cowl as a whole covering the engine and exhaust pipe, wherein only a portion of the cowl, which covers a portion projecting to a vicinity of a maximum bank angle of the exhaust pipe or a portion lowered to a vicinity of ground clearance is made of metal, and a remaining portion of the cowl is made of resin, surfaces of the metal portion and the resin portion adjacent to each other being almost flush with each other, and a plurality of the exhaust pipes separated to right and left sides to slantingly pass across right and left outer sides of rear swing arms, respectively, are arranged in an inner side of the metal portion, characterized in that a bottom line of the cowl structure in side view is formed adjacent surfaces of the metal portion and the resin portion.

According to claim 1, a part of the cowl covering the exhaust pipe, which covers the portion of the body projecting to the vicinity of the position defining the maximum bank angle or the portion of the body lowered to the vicinity of the level of the ground clearance, is made of metal, and therefore, the part of the cowl can be arranged close to the exhaust pipe whose temperature becomes high. As a result, an amount of projection of the cowl to outer side can be suppressed, ensuring a sufficiently large maximum bank angle. In addition, since a projecting amount to the bottom can be reduced, if a projecting portion is related to the ground clearance, the ground clearance can be increased.

Moreover, since the cowl is made of resin except the portion made of metal, the cowl as a whole can be light-weighted and inexpensive.

In addition, the surfaces of the metal portion and the resin portion which are adjacent to each other are almost flush with each other. Thus, not only a rectifying effect on air flow can be obtained but also visually integrated appearance as a cowl can be maintained, thus improving the appearance of the cowl.

Furthermore, the exhaust pipes accommodated in the inner side of the metal portion are separated to the right and left. However, even in this case, the metal portion is arranged in close proximity to each of the exhaust pipes, thereby ensuring the maximum bank angles. Therefore, even in a case where the exhaust pipes passing across the outer sides on the right and left sides of the rear swing arms are separately accommodated on the right and left sides, the projection toward the outer sides can be reduced as much as possible.

### Brief Description of the Drawings

Fig. 1 shows a side view of a motorcycle according to an embodiment.
Fig. 2 shows a side view of a rear end portion of a front cowl.
Fig. 3 shows a view showing maximum bank angles.
Fig. 4 shows a cross sectional view taken along the line 4-4 of Fig. 2.
Fig. 5 shows a side view of the front cowl.
Fig. 6 shows a plan view of the front cowl.

### Description of the Preferred Embodiments of the Invention

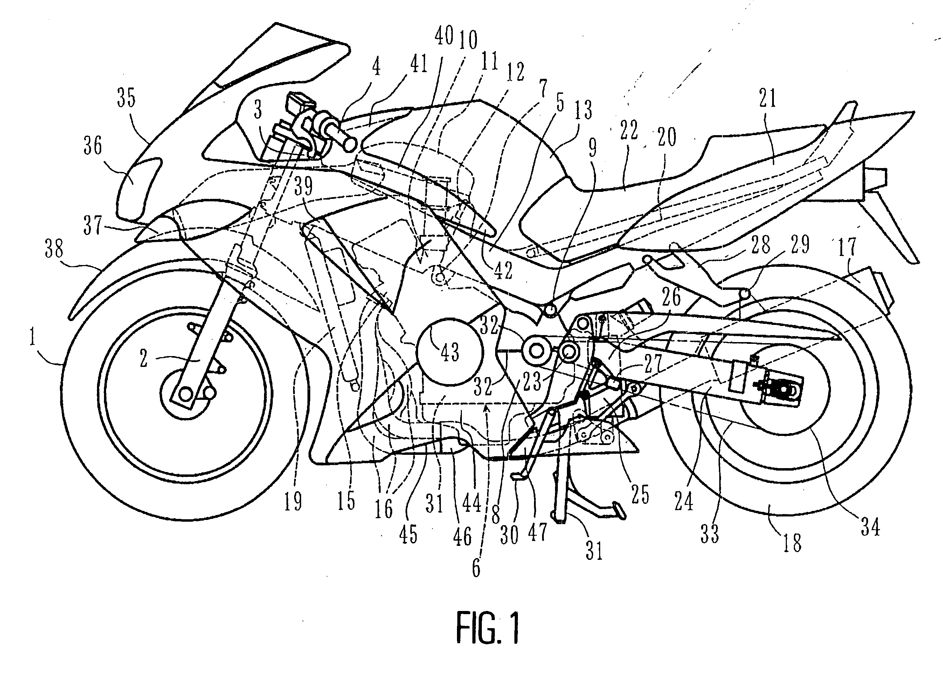

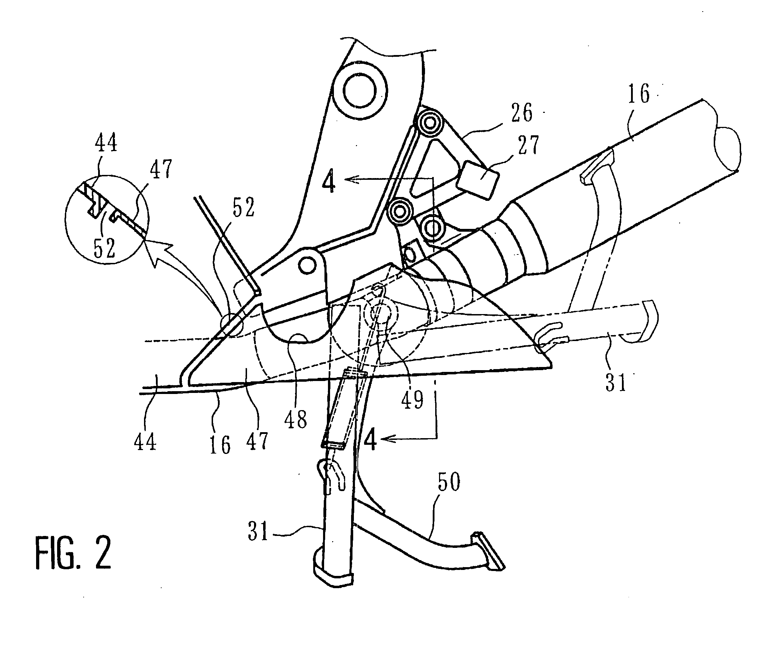

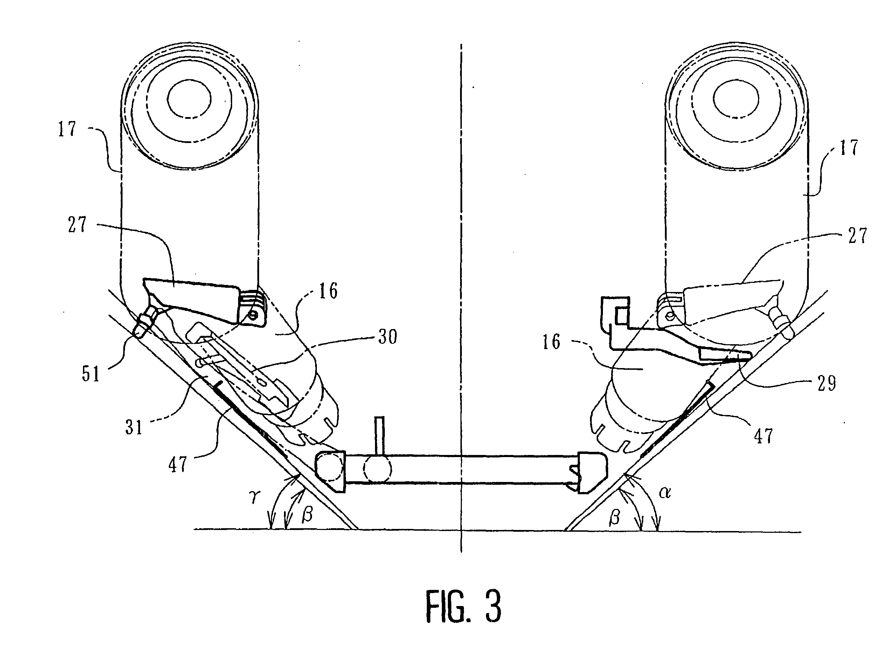

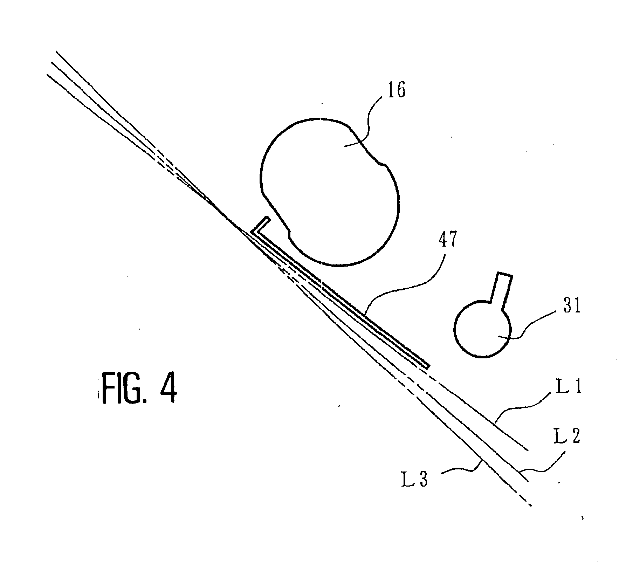

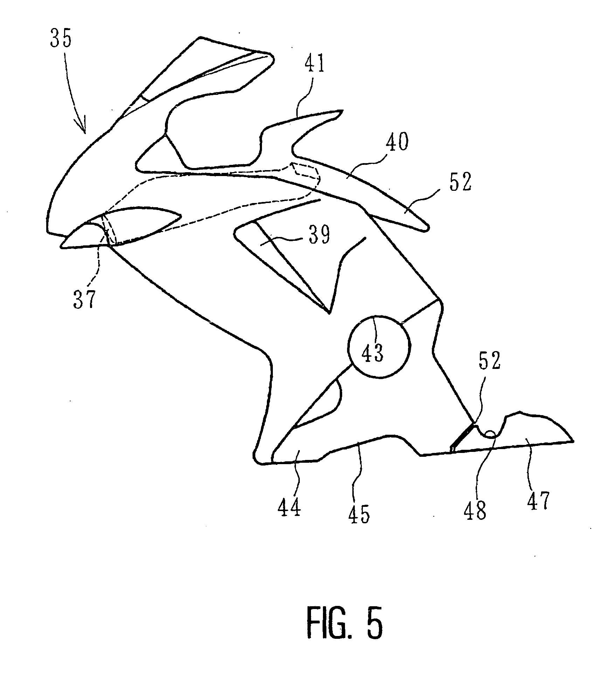

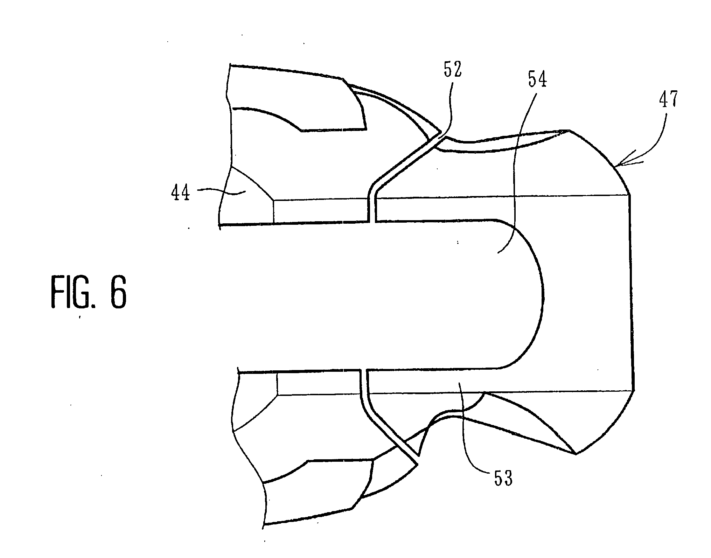

Hereinbelow, an embodiment is described based on the drawings. Fig. 1 is a side view of a motorcycle according to the present embodiment, Fig. 2 is a side view of a rear end portion of a front cowl, Fig. 3 is a view showing maximum bank angles, Fig. 4 is a cross-sectional view taken along the line 4-4 of Fig. 2, Fig. 5 is a side view of the front cowl, and Fig. 6 is a plan view of the rear end portion of the front cowl.

In Figs. 1 and 2, reference numeral 1 denotes a front wheel, reference numeral 2 denotes a front fork, reference numeral 3 denotes a head pipe, reference numeral 4 denotes a handle, and reference numeral 5 denotes a mainframe. The mainframe 5 is made of a light alloy and has an oblong and rectangular tube shape. In addition, the mainframe 5 is branched to the right and left and slantingly extends downward to the rear.

Under the mainframe 5, an in-line four cylinder engine 6 is supported. Two supporting points therefor are a point 7 where the middle portion of the mainframe 5 and the upper portion of a cylinder are joined, and a point 9 where the rear end of the mainframe 5 and the upper rear end portion of a mission case 8 of the engine 6 are joined.

Air is drawn in downdraft manner from an air cleaner 11 supported by the mainframe 5 to an air intake port 10 of the engine 6. Reference numeral 12 denotes an injector. The air cleaner 11 is accommodated within a recessed portion of a fuel tank 13, which is formed on bottom side of the front portion thereof to be convex upward.

Exhaust pipes 16 extend from an exhaust port 15 to the front, pass through the underneath of the engine 6 toward the rear, and are connected to a pair of right and left mufflers 17. The pair of right and left mufflers 17 is provided on both sides of a rear wheel 18. Reference numeral 19 denotes a radiator placed in front of the engine 6.

A pair of right and left seat rails 20 is slantingly provided upward from the rear end portion of the mainframe 5 to the rear. A rear cowl 21 is provided, surrounding the periphery of the seat rails 20 and a seat 22 is provided on the top of the rear cowl 21.

In the middle portion in a vertical direction of the rear end of the mission case 8, a pivot shaft 23 supports the front end portions of rear swing arms 24 swingably in a vertical direction. A rear wheel 18 is supported at the rear ends of the rear swing arms 24.

Reference numeral 25 denotes a rear cushion, reference numeral 26 denotes a step bracket, reference numeral 27 denotes a main step provided to be collapsible, reference numeral 28 denotes pillion step holders extending downward from the seat rails 20 to the right and left sides of a body, respectively, and reference numeral 29 denotes pillion steps provided at the lower ends of the pillion step holders, respectively. The lower ends of the pillion step holders 28 support the mufflers 17, respectively. Reference numeral 30 denotes a side stand, reference numeral 31 denotes a main stand, reference numeral 32 denotes an output sprocket, reference numeral 33 denotes a chain, and reference numeral 34 denotes a driven sprocket. Further, front cowl 35 covers the front of the body through both right and left side surfaces thereof.

As shown in Figs. 1 and 5, a housing for a light such as a headlight or the like is provided at the front end of the front cowl. Ducts 37 are opened downward to the front in a slanting direction at positions under the vicinity of the housing on slightly rear side thereof on the right and left sides. Openings of the ducts 37 are directed toward the front-end of a front fender 38. The ducts 37 slantingly extend upward to the rear through the inner side of the front cowl 35 and are opened within the air cleaner 11.

Exhaust air ducts 39 are opened on the right and left sides of the front cowl 35 in the vicinity of and to the rear of the radiator 19. Further, the upper portion of the front cowl 35 is provided with an upper extending portion 40 covering the front of the head pipe 3 through the sides of the air cleaner 11 along the vicinities of boundary portions between the fuel tank 13 and the main frame 5 when viewed from the side. The middle portion of the upper extending portion 40 is formed as a top overhanging portion 41 covering the front surface of the fuel tank 13 through the center portion of the top surface of the same. The rear end portion of the upper extending portion 40 is separated from the main portion of the front cowl 35, forming rear extending portions 42 which extend to the rear direction along the top surface of the mainframe 5.

The side of the front cowl 35 is split in a slanting top to bottom direction at a crank portion opening 43. A lower cowl 44 covers the sides of lower portion and bottom of the engine and the exhaust pipes 16. A notch portion 45 is formed at the center of the bottom portion of the lower cowl 44, and a part of a collecting portion 46 is exposed outside at the bottom from the notch portion 45.

The collecting portion 46 is a portion where the four exhaust pipes 16 are collected into two pipes on the right and left sides and has a height approximately the same as that of the lowermost portion of the engine. From the rear of the collecting portion 46, the exhaust pipes 16 are arranged as the two pipes on the right and left sides. A portion in the lower cowl 44, covering the rear of the collecting portion 46, is formed as a metal portion 47. The metal portion 47 is a member which covers the right and left exhaust pipes 16 from the rear of the collecting portion 46 to the vicinity of a portion where the main stand 31 is turnably attached.

As shown in Figs. 2 and 5, the front portion of the side surface of the metal portion 47 is curved downward, forming a recessed portion 48 to provide a side stand 30 with an escape. The middle portion of the metal portion 47 is most overhanging upward to cover a turning shaft 49 of the main stand 31 and the side surface of a base portion in the vicinity of the rotating shaft 49. A portion in the main stand 31 from a pedal portion 50 branched from the end side thereof to the rotating shaft 49 rotates to rise and fall on the inner side of the metal portion 47. The exhaust pipes 16 extend from the rear side of the metal portion 47 upward and rearward in a slanting direction. The step brackets 26 and the main steps 27 are positioned above the exhaust pipes 16, respectively.

Fig. 3 is a view showing a relationship between maximum bank angles in areas from the rear of the body to the metal portion 47. The exhaust pipes 16 are placed separately on the right and left sides of the body in a slanting direction along the maximum bank angle α. In this case, the maximum bank angle α is defined by the end of the pillion step 29 and a part of the exhaust pipe 16.

However, on the left side of the body, a part of the accommodated main stand 31 defines a maximum angle γ. The maximum angles α and γ may be slightly different from each other. The accommodated side stand 30 comes in close proximity to the bank angle γ.

On both right and left sides of the body, tips of touch pins 51 provided at the tips of the main step 27 define bank angles β, each being slightly smaller than the maximum bank angle α. However, the main step 27 can be accommodated and thus does not limit the maximum bank angle α.

The metal portion 47 is disposed along the maximum bank angles α and γ and covers outer sides of portions of the exhaust pipes 16 in the close proximity to the positions defining the maximum angles α. Specifically, as evident in Fig. 4, the metal portion 47 is provided at a position in close proximity to the positions defining the maximum bank angles α and γ. Lines L1 to L3 in Fig. 4 represent lines showing the various bank angles, and Line L1 corresponds to the bank angle γ. The metal portion 47 is disposed along Line L1 and at a position shifted from the line L1 in a direction where the bank angles are slightly increased.

As shown in Fig. 5, only the metal portion 47 in the front cowl 35 is made of metal, and the remaining portion including the lower cowl 44 is made of resin. Known resin such as polycarbonate or the like can be used as a resin material as appropriate. For the metal portion 47, a metal material such as an aluminum alloy or the like can be used as appropriate.

As shown in Fig. 2, the front end portion of the metal portion 47 and the rear end portion of the lower cowl 44 are adjacent to each other through a gap 52. The outer surfaces of the portions adjacent to each other are almost flush with each other as shown in an enlarged cross section in the drawing, thus realizing visually integrated appearance as the front cowl 35. Specifically, the entire front cowl 35 including the metal portion 47 separated therefrom forms one cowl and covers the engine 6 and the exhaust pipes 16.

A portion where the exhaust pipes 16 are collected into one is exposed outside at the bottom from the front bottom end portion of the metal portion 47 . When viewed from the side, the top half side of the collecting portion is partially covered by the metal portion 47. Therefore, as shown in Fig. 6, a notch 54 opened on the front side is formed at the center of a bottom portion 53, and the exhaust pipes 16 extend from the notch 54 toward the bottom. In addition, as evident in this drawing, the metal portion 47 is not symmetry, and the gaps 52 and the like on the right and left sides are different from each other.

The exhaust pipes 16 which are collected into two pipes pass through the inside of the rear half portion of the metal portion 47 alongside each other. The respective collected exhaust pipes 16 are positioned in close proximity to the lowermost portion up to the front portion of the metal portion 47. However, the exhaust pipes 16 passing through the rear half portion side of the metal portion 47 are largely separated from each other to the right and left sides, respectively, and slantingly extend upward across the right and left outer sides of the rear swing arms 24 in a slanting direction. The metal portion 47 is relatively wide so that the two exhaust pipes 16 are positioned side by side.

Next, effects of this embodiment are described. First of all, the rearmost portion on the side of the front cowl 35, which is a part of the front cowl 35 covering the exhaust pipes 16, is separated and formed as the metal portion 47. In the rearmost portion on the side of the front cowl 35, the exhaust pipes 16 are projected to the vicinities of the areas of the body, which define the maximum bank angles α and γ· Since the portion covering the projected exhaust pipes 16 is made of metal, the metal portion can be placed in close proximity to the exhaust pipes 16 whose temperature becomes high.

As a result, the metal portion 47 suppresses projection toward the outer sides in directions in which the maximum bank angles are reduced, thus ensuring the sufficiently large maximum bank angles in comparison with a case of resin cowl. In addition, the cowl is made of resin except for the metal portion, and thereby the entire cowl can be made light weighted and inexpensive.

Further, surfaces of the metal portion 47 and the rear end portion of the lower cowl 44 made of resin, which are adjacent to each other, are formed to be almost flash with each other. Thus, it becomes possible not only to obtain a rectifying effect on air flow but also to maintain visually integrated appearance as the front cowl 35, thereby improving the appearance of the front cowl.

Moreover, the exhaust pipes 16 accommodated on the inner side of the metal portion 47 are separately placed on the right and left sides, which tends to reduce the bank angles. However, even in this case, the maximum bank angles can be ensured since the metal portion 47 is arranged close to each of the exhaust pipes 16. Therefore, even in the case where the exhaust pipes 16 passing across the outer sides on the right and left sides of the rear swing arms 24 are separately accommodated on the right and left sides, it is possible to reduce the projection toward outer sides as much as possible.

Note that the present invention is not limited to the embodiment described above and can be modified and applied in various manners without departing from the principle of the invention as defined by the appended claims. For example, the cowl is not limited to the front cowl 35 and may be side cowls which cover the sides only. Moreover, the portion lowered to the vicinity of the level of the ground clearance may be covered with the metal portion. Even in this case, the metal portion is placed in close proximity to the exhaust pipes and thus the projection toward the bottom can be reduced. Therefore, if the portion to be covered by the metal portion is related to the ground clearance, the ground clearance can be increased. In addition, only a part of the cowl is made of metal, thus the entire cowl can be light weighted and inexpensive in comparison with the cowl entirely made of metal.

## Claims

1. A motorcycle with a cowl structure, the motorcycle being provided with an engine (6) positioned between front and rear wheels (1, 18), an exhaust pipe (16) extending from the engine (6) to rear of a body through a lower portion of the body, and a cowl as a whole covering the engine (6) and the exhaust pipe (16),
wherein only a portion (47) of the cowl, which covers a portion projecting to a vicinity of a position defining a maximum bank angle (α,γ) of the exhaust pipe (16) or a portion lowered to a vicinity of a level of ground clearance is made of metal, and a remaining portion of the cowl is made of resin,
surfaces of the metal portion (47) and the resin portion adjacent to each other being almost flush with each other,
and a plurality of the exhaust pipes (16) separated to right and left sides to slantingly pass across right and left outer sides of rear swing arms (24), respectively, are arranged in an inner side of the metal portion (47),
**characterized in that** a bottom line of the cowl structure in side view is formed by adjacent surfaces of the metal portion (47) and the resin portion.

2. A motorcycle according to claim 1, wherein a notch (54) opened on a front side of the metal portion (47) is formed at the center of a bottom portion (53), and the exhaust pipes (16) pass through the inside of said notch (54).

## Patentansprüche

1. Motorrad mit einer Verkleidungsstruktur, wobei das Motorrad mit einer Brennkraftmaschine (6) versehen ist, die zwischen einem Vorder- und einem Hinterrad (1, 18) positioniert ist, wobei ein Auslassrohr (16) von der Brennkraftmaschine (6) durch einen unteren Bereich eines Körpers zum hinteren Bereich des Körpers verläuft, und eine Verkleidung als Ganzes die Brennkraftmaschine (6) und das Auslassrohr (16) bedeckt,
wobei nur ein Bereich (47) der Verkleidung aus Metall gefertigt ist, der einen Bereich überdeckt, welcher in eine Nähe einer Position vorsteht, die einen maximalen Querneigungswinkel (α, γ) des Auslassrohrs (16) definiert, oder einen Bereich überdeckt, der in eine Nähe eines Niveaus der Bodenfreiheit abgesenkt ist, und wobei ein verbleibender Bereich der Verkleidung aus Harz gefertigt ist,
wobei aneinander angrenzende Flächen des Metallbereichs (47) und des Harzbereichs miteinander annähernd fluchten,
und wobei eine Mehrzahl der Auslassrohre (16), die an der rechten und linken Seite separiert sind, um schräg über die rechte bzw. linke Außenseite von hinteren Schwingenarmen (24) zu verlaufen, in einer Innenseite des Metallbereichs (47) angeordnet sind,
**dadurch gekennzeichnet, dass** eine Bodenlinie der Verkleidungsstruktur in Seitenansicht durch aneinander angrenzende Flächen des Metallbereichs (47) und des Harzbereichs gebildet ist.

2. Motorrad nach Anspruch 1, wobei eine Kerbe (44), welche an einer Vorderseite des Metallbereichs (47) geöffnet ist, im Zentrum eines Bodenbereichs (53) gebildet ist, und wobei die Auslassrohre (16) durch das Innere der Kerbe (54) hindurch verlaufen.

## Revendications

1. Motocycle avec structure de carénage, le motocycle étant pourvu d'un moteur (6) positionné entre des roues avant et arrière (1, 18), un tuyau d'échappement (16) s'étendant du moteur (6) jusqu'à l'arrière d'une carrosserie à travers une partie inférieure de la carrosserie, et un carénage d'un seul tenant recouvrant le moteur (6) et le tuyau d'échappement (16),
dans lequel seule une partie (47) du carénage, qui couvre une partie se projetant jusqu'au voisinage d'une position définissant un angle d'inclinaison latérale maximum (α, γ) du tuyau d'échappement (16) ou une partie abaissée jusqu'au voisinage d'un niveau de garde au sol est fabriquée en métal, et une partie restante du carénage est fabriquée en résine,
les surfaces de la partie métallique (47) et de la partie en résine adjacentes l'une par rapport à l'autre étant presque au niveau l'une de l'autre,
et une pluralité de tuyaux d'échappement (16) séparés vers les côtés droit et gauche pour passer de manière oblique à travers les côtés externes droit et gauche des bras oscillants arrière (24), respectivement, sont agencés dans un côté interne de la partie métallique (47),
**caractérisé en ce qu'**une ligne inférieure de la structure de carénage sur une vue latérale est formée par des surfaces adjacentes de la partie métallique (47) et 1a partie en résine.

2. Motocycle selon la revendication 1, dans lequel une encoche (54) ouverte sur une face avant de la partie métallique (47) est formée au centre d'une partie inférieure (53), et les tuyaux d'échappement (16) passent à travers l'intérieur de ladite encoche (54).
